# EUROPEAN PATENT SPECIFICATION

(11) **EP 1 887 196 B1**
(45) Date of publication and mention of the grant of the patent: **06.05.2020**
(21) Application number: 07113158.5
(22) Date of filing: 26.07.2007
(51) Int. Cl.: F01P 11/02

(54) **METHOD FOR THE DEGASSING OF FLUID IN HEATING AND COOLING SYSTEMS, AND AN ARRANGEMENT**
VERFAHREN ZUR ENTGASUNG VON FLÜSSIGKEITEN IN ERWÄRMUNGS- UND KÜHLSYSTEMEN SOWIE ANORDNUNG
PROCÉDÉ DE DÉGAZAGE D'UN LIQUIDE DANS DES SYSTÈMES DE CHAUFFAGE ET DE REFROIDISSEMENT, ET AGENCEMENT

(30) Priority: 08.08.2006 SE 0601651
(43) Date of publication of application: 13.02.2008
(73) Proprietor: QTF Sweden AB, 393 53 Kalmar (SE)
(72) Inventor: Carlsson, Björn, 392 43, Kalmar (SE)
(74) Representative: Örtenblad, Bertil Tore

(56) References cited:
- EP-A2- 0 187 683
- WO-A1-95/21356
- JP-A- H10 323 665

## Description

The present invention relates to a method for the degassing of fluid in heating and cooling systems, and an arrangement.

Corrosion in heating and cooling systems that contain a heat-bearing fluid is a major problem in such systems.

The fluid in heating and cooling systems is normally water, or water-based solutions that contain glycol or salts.

When corrosion occurs in such systems, corrosion products in the form of oxides are formed that are deposited in the system or that accompany the flow of fluid in the system. The most common oxides are Fe₂O₃ and Fe₃O₄.

Different types of corrosion take place in such systems, such as general corrosion, galvanic corrosion, erosion corrosion, crevice corrosion, microbiologically induced corrosion and local pit corrosion.

The water quality is of major significance for the corrosion process. The corrosion primarily depends on, among other factors, the quantities of dissolved substances, gases dissolved in the fluid, the pH value, temperature, etc. One property on which the process depends strongly is the concentration of dissolved oxygen in the fluid, since oxygen is required for an oxidation process.

In closed water systems, which today are the dominating type, the gases,including air, that are released from the fluid will be present in the form of bubbles at high points in the system.

The capacity of the water to dissolve air depends on temperature, pressure and salt concentration. Water dissolves more gas at higher pressures and at lower temperatures.

The oxygen that is consumed during oxidation within the system is replaced through oxygen from the surroundings leaking into the system, such that equilibrium for the oxygen in the system is achieved. The leakage of oxygen into the system depends on the degree of sealing of the system, and on whether the component parts are gas-tight or not. It is impossible to make a system fully gas-tight: leakage into the systems will always take place.

Systems thus require to be degassed in order to reduce the level of oxygen in the system.

Open systems, i.e. systems with an expansion vessel through which de-airing took place, have previously been used. Closed systems are now used in order to make it possible to pressurise the systems.

Thus, the problem arises of how to be able to degas closed systems.

Thus, the problem arises of how to be able to degas closed systems.

Wo 95/21356 shows a device in a heating or cooling system with a continuous flow of system liquid in a closed conduit circuit. The device comprises a pump located after a pressure reducing means. This technique creates a sub pressure. However, the sub pressure is limited due to the location of the pump relative to the pressure reducing means.

The present invention solves this problem.

The present invention thus relates to a method for the degassing of heat-bearing fluid in heating and cooling systems, where the system is a closed system and where the fluid circulates in the system, where a sub-current of the fluid is caused to be led into a circuit that is parallel with the principal circuit of the system, and is characterized in, that the fluid in the said parallel circuit is caused to be pumped through an ejector, whereby the pressure of the fluid is reduced during passage through the ejector, in that the fluid is led after the ejector into an air-separation chamber in which the air that previously was dissolved in the fluid rises in the form of gas bubbles, in that the free gas is caused to be emitted to the surroundings through a float de-airer and in that the fluid in the air-separation chamber is led to the principal circuit of the system.

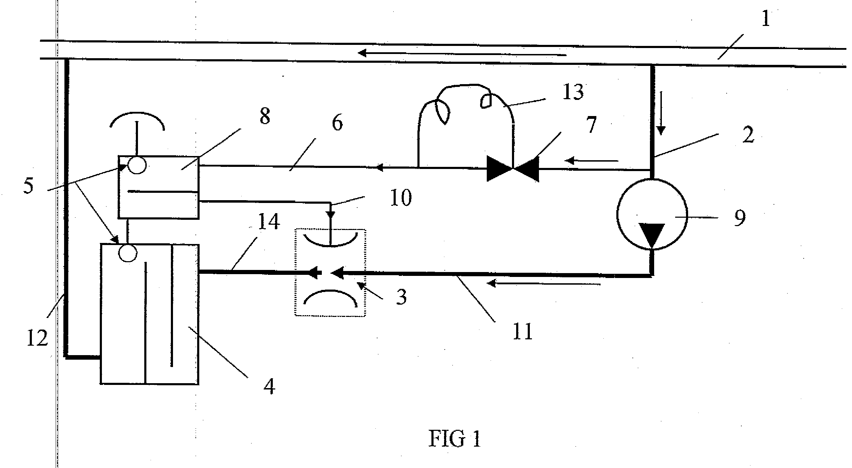

Furthermore, the invention relates to an arrangement of the type and having the principal characteristics that are specified in the attached patent claim 4.
The invention is described in more detail below, partially with reference to an embodiment of the invention shown in the attached drawings, where
- Figure 1 shows a flow diagram of a first embodiment of the invention, and
- Figure 2 shows a flow diagram of a second embodiment of the invention.
The present method concerns the degassing of heat-bearing fluid in heating and cooling systems, where the system is a closed system and where the fluid circulates in the system. According to the invention, a sub-current of the fluid is caused to be led into a circuit 2 that is parallel with the principal circuit 1 of the system, see Figure 1. The fluid in the said parallel circuit 2 is caused to be pumped through an ejector 3, whereby the pressure of the fluid will be reduced during passage through the ejector 3. The fluid is led after the ejector 3 to an air-separation chamber 4 in which the air that previously was dissolved in the fluid rises in the form of gas bubbles. The free gas is subsequently caused to be emitted to the surroundings through a float de-airer 5. The fluid in the air-separation chamber is led to the principal circuit 1 of the system.

According to a first embodiment, see Figure 1, the said parallel circuit 2 comprises two parallel circuits, where fluid is caused to be led in a first circuit 6 through a pressure-reduction valve 7 to a degassing chamber 8. The fluid is led in a second circuit 11 to the said ejector 3 via a pump 9 and onwards through a line 14 to the said air-separation chamber 4 and onwards to the principal circuit 1 of the system through a line 12. The air-separation chamber 4 is connected to the degassing chamber 8. A negative pressure is caused to be formed in the degassing chamber 8 by means of a line 10 from the negative pressure side of the said ejector 3 to the degassing chamber 8. The free gas is caused to be emitted to the surroundings from the degassing chamber 8 through a float de-airer 5.

The ejector 3 is of conventional type with an inlet, a side channel, and a diffuser in the form of a funnel-formed outlet.

The air-separation chamber comprises three chambers located one after the other, namely a negative pressure chamber, an air-separation chamber, and an outlet chamber. A line 12 passes from the outlet chamber to the principal circuit 1 of the system.

The flow to the parallel circuit 2 is a small fraction of the flow in the principal circuit of the system, for example 5%.

From this flow, 20%, for example, is led into the said first circuit 6 and 80% into the said second circuit 11.

Fluid is pumped in the second circuit 11 to the ejector 3 by means of a pump 9. The pressure of the fluid in the principal circuit of the system can vary from case to case, but it may be, for example, 2 bar. The pressure after the pump may be in this example, 3 bar, for example. The pressure after the ejector 3 may be, for example, 2 bar.

This gives the result that the pressure in the line 10 from the negative pressure side of the ejector is, for example, 1.1 bar. This negative pressure relative to the pressure in the principal line of the system creates a negative pressure in the degassing chamber 8. A pressure-reduction valve 7 is located in the said second circuit 6 in order to maintain a negative pressure in the degassing chamber. This valve 7 may be controlled in a known manner by the pressure following the valve through a line 13.

The degassing chamber 8 and the de-airing chamber 4 are relatively small. The chambers may have volumes of approximately 0.5 to 2 litres in an equipment with a capacity of 5,000 litres of fluid.

The said float de-airer 5, which is here not shown in detail, comprises a float that floats on the fluid in the air-separation chamber 4 and in the degassing chamber 8. The float supports an upwardly protruding needle that interacts with a nipple. The nipple is in contact with the surroundings.

When gas is formed in the air-separation chamber 4, the fluid level in the chamber 4 will fall, whereby the float moves downwards, whereby the needle opens the hole in the nipple such that the gas can stream out through the nipple to the degassing chamber 8. In an equivalent manner, the float of the degassing chamber opens when gas is emitted from the fluid and the fluid level in the degassing chamber 8 falls, whereby the gas streams through the nipple out from the degassing chamber to the surroundings.

Thus a negative pressure is formed in the ejector 3 that is transferred through the line to the degassing chamber. The same pressure is present in the line 6. The reduction in pressure across the pressure-reduction valve 7 can be regulated in a known manner. Gas that is dissolved in the fluid will leave the fluid as a result of the reduction in pressure, and form gas bubbles in the fluid. The bubbles are separated in the degassing chamber 8 and they are removed through the float de-airer 5. Any bubbles that accompany the flow through the pump 9 or any bubbles that are formed by negative pressure following the ejector 3 or any bubbles that are added to the ejector 3 through the line 10 between the degassing chamber and the ejector 3 will be separated in the air-separation chamber and will be removed through the float separator 5 in the chamber 4. The degassed fluid is returned to the principal flow of the system through the line 12.

Thus, the amount of dissolved gas in the fluid in the principal flow is reduced. Since the degassing arrangement is active all the time, all fluid will be treated, even if only a small part of the principal flow flows through the arrangement at any one time.

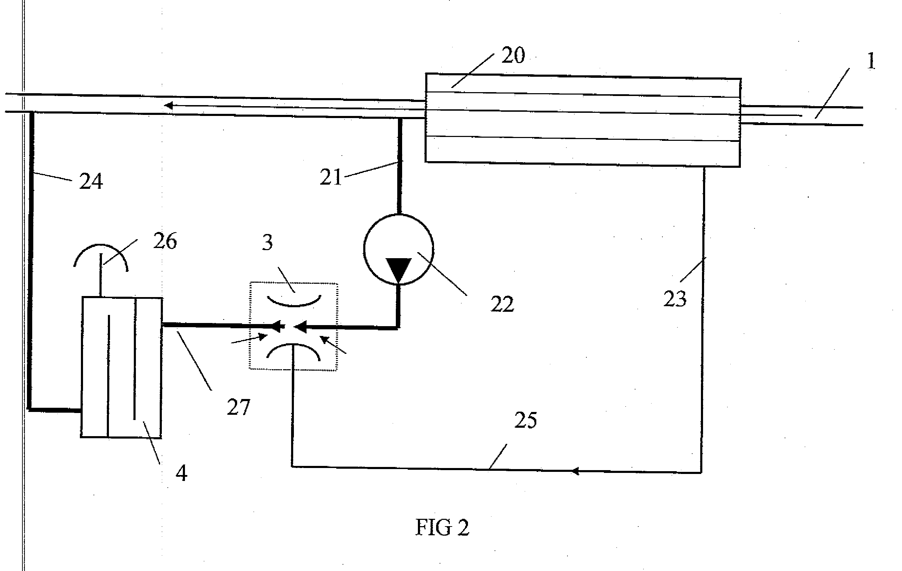

According to a second embodiment of the invention, shown in Figure 2, a membrane unit 20 is present coupled in series with the principal circuit 1 of the system, and arranged to allow gas to pass, but not water. The membrane unit can instead be located in a sub-current circuit of the system. The membrane unit may be of any suitable known type, for example, a membrane unit that is supplied by the company Membrana GmbH, Vuppertal, Germany, under the Liqui-Cel trademark.

The said parallel circuit comprises two circuits, where fluid is led in a first circuit 21 from the principal circuit 1 of the system through a pump 22 to the said ejector 3 and onwards to an air-separation chamber 4 through a line 27, of the same type as that described above, and onwards to the principal circuit 1 of the system through a line 24.

In a second circuit 23, fluid from the side of the membrane of the membrane unit 20, that is opposite to the side along which the fluid of the principal circuit 1 of the system flows, is led to the negative pressure side of the ejector 3 through a line 25.

The pressure in the principal circuit 1 of the system may be, for example, 2 bar. Thus, the pressure at the negative pressure side of the ejector, and thus in the line 25, may be 0.1 bar. The pressure after the pump may be 3 bar, and the pressure in the line 24 may exceed 2 bar.

The gas that is dissolved in the fluid passes through the membrane wall as a result of the pressure difference across the membrane, and passes through the line 25 and through the ejector 3 to the air-separation chamber 4 as free bubbles. The gas is removed from the air-separation chamber 4 through the float separator 26 to the atmosphere. The float separator 26 is of the same type as that described above.

In this design, 5%, for example, of the principal flow of the system can be led into the line 21.

Thus the principal flow is continuously degassed in this embodiment.

The free gas is caused to be emitted to the surroundings from the air separation chamber 4 through a float de-airer 26.

Thus, the amount of dissolved gas in the fluid in the principal flow is reduced.

The arrangement according to the invention can be mounted onto the principal line or onto a sub-current line of an existing system. A very advantageous application is to mount the present arrangement at shunt groups intended to shunt water in heating equipment or in cooling equipment.

A number of embodiments have been described above. It is, however, obvious that the method and the arrangement according to the invention can be varied with respect to the detailed construction of the circuits.

Thus the present invention is not to be regarded as being limited to the embodiments described above,since it can be varied within the scope of the attached patent claims.

## Claims

1. A method for the degassing of heat-bearing fluid in heating and cooling systems, where the system is a closed system and where the fluid circulates in the system, where a sub-current of the fluid is caused to be led into a circuit (2; 21, 23) that is parallel with the principal circuit (1) of the system, or a sub-current circuit of the system, **characterized in, that** the fluid in the said parallel circuit (2; 21, 23) is caused to be pumped through an ejector (3), whereby the pressure of the fluid is reduced during passage through the ejector, **in that** the fluid is led after the ejector (3) into an air-separation chamber (4) in which the air that previously was dissolved in the fluid rises in the form of gas bubbles, **in that** the free gas is caused to be emitted to the surroundings through a float de-airer (5; 26), and **in that** the fluid in the air-separation chamber (4) is led to the principal circuit (1) of the system.

2. A method according to claim 1, **characterised in that** the said parallel circuit comprises two parallel circuits, where fluid in a first circuit (6) is caused to be led through a pressure-reduction valve (7) to a degassing chamber (8) and where fluid in a second circuit is led through a pump (9) to the said ejector (3) and onwards to the said air-separation chamber (4) and onwards to the principal circuit (1) of the system, **in that** the air-separation chamber (4) is in connection with the degassing chamber (8), **in that** a negative pressure is caused to be formed in the degassing chamber (8) by means of a line (10) from the negative-pressure side of the said ejector (3) to the degassing chamber (8), and **in that** the free gas is caused to be emitted to the surroundings from the degassing chamber (8) through a float de-airer (5).

3. A method according to claim 1, **characterised in that** a membrane unit (20) is located in series with the principal circuit of the system, or a sub-current circuit of the system, arranged to allow the passage of gas but not water, **in that** the said parallel circuit comprises two circuits, where fluid in a first circuit (21) is led from the principal circuit (1) of the system through a pump (22) to the said ejector (3), onwards to an air-separation chamber (4) and onwards to the principal circuit (1) of the system through a line (24), and where in a second circuit (23) gas from that side of the membrane of the membrane unit (20) that is opposite the side along which the fluid flows from the principal circuit (1) of the system is caused to be led to the negative-pressure side of the ejector (3) through a line (25), and **in that** the free gas is caused to be emitted to the surroundings from the air-separation chamber (4) through a float de-airer (26).

4. An arrangement for the degassing of heat-bearing fluid in heating and cooling systems, where the system is a closed system and where the fluid circulates in the system, where a circuit (2; 21, 23) that is parallel with the principal circuit (1) of the system, or a sub-current circuit of the system, is arranged to lead a sub-current of the fluid, **characterized in, that** a pump (9; 22) is present arranged to pump fluid in the said parallel circuit (2; 21, 23) through an ejector (3), whereby the pressure of the fluid is reduced during its passage through the ejector, **in that** a line (14; 27) is present arranged to lead fluid after the ejector (3) to an air-separation chamber (4) in which the air that previously was dissolved in the fluid rises in the form of gas bubbles, and **in that** a float de-airer (5; 26) is present arranged to lead the free gas to be emitted to the surroundings, and **in that** a line (12; 24) is present arranged to lead the fluid in the air-separation chamber (4) to the principal circuit (1) of the system.

5. An arrangement according to claim 4, **characterised in that** the said parallel circuit comprises two parallel circuits, where a first circuit (6) is arranged to lead fluid through a pressure-reduction valve (7) to a degassing chamber (8) and where a second circuit is arranged to lead fluid through a pump (9) to the said ejector (3), onwards to the said air-separation chamber (4) and onwards to the principal circuit (1) of the system, **in that** the air-separation chamber (4) is in connection with the degassing chamber (8), **in that** a line (10) from the negative-pressure side of the said ejector (3) to the degassing chamber (8) is arranged to form a negative pressure in the degassing chamber (8), and **in that** a float de-airer (5; 26) is present arranged to lead the free gas to be emitted to the surroundings.

6. A method according to claim 1, **characterised in that** a membrane unit (20) is located in series with the principal circuit of the system, or a sub-current circuit of the system, arranged to allow the passage of gas but not water, **in that** the said parallel circuit comprises two circuits, where a first circuit (21) is arranged to lead fluid from the principal circuit (1) of the system through a pump (22) to the said ejector (3), onwards to an air-separation chamber (4) and onwards to the principal circuit (1) of the system through a line (24), and where a second circuit (23) is arranged to lead gas from that side of the membrane of the membrane unit (20) that is opposite the side along which the fluid flows from the principal circuit (1) of the system to the negative-pressure side of the ejector (3) through a line (25), **in that** a float de-airer (5; 26) is present arranged to lead the free gas to be emitted to the surroundings, and **in that** a line (12; 24) is present arranged to lead the fluid in the air-separation chamber (4) to the principal circuit (1) of the system.

## Patentansprüche

1. Verfahren zur Entgasung von wärmeführendem Fluid in Heiz- und Kühlsystemen, wobei das System ein geschlossenes System ist und wobei das Fluid in dem System zirkuliert, wobei ein Teilstrom des Fluids in einen Kreislauf (2; 21, 23), der parallel zu dem Hauptkreislauf (1) des Systems ist, oder in einen Teilstromkreislauf des Systems geleitet wird,
**dadurch gekennzeichnet, dass** das Fluid in besagtem Parallelkreislauf (2; 21, 23) durch einen Ejektor (3) gepumpt wird, wodurch der Druck des Fluids während einem Hindurchtretens durch den Ejektor verringert wird, dass das Fluid nach dem Ejektor (3) in eine Luftabscheidekammer (4) geleitet wird, in welcher die zuvor im Fluid gelöste Luft in Form von Gasblasen aufsteigt, dass das freie Gas durch einen Schwimmerentlüfter (5; 26) in die Umgebung abgegeben wird, und dass das Fluid in der Luftabscheidekammer (4) zu dem Hauptkreislauf (1) des Systems geleitet wird.

2. Verfahren nach Anspruch 1, **dadurch gekennzeichnet, dass** besagter Parallelkreislauf zwei Parallelkreisläufe umfasst, wobei Fluid in einem ersten Kreislauf (6) durch ein Druckreduzierventil (7) zu einer Entgasungskammer (8) geleitet wird, und wobei Fluid in einem zweiten Kreislauf durch eine Pumpe (9) zu besagtem Ejektor (3) und weiter zu besagter Luftabscheidekammer (4) und weiter zu dem Hauptkreislauf (1) des Systems geleitet wird, dass die Luftabscheidekammer (4) mit der Entgasungskammer (8) in Verbindung steht, dass in der Entgasungskammer (8) mittels einer Leitung (10) von der Unterdruckseite des besagten Ejektors (3) zu der Entgasungskammer (8) ein Unterdruck gebildet wird, und dass das freie Gas aus der Entgasungskammer (8) durch einen Schwimmerentlüfter (5) in die Umgebung abgegeben wird.

3. Verfahren nach Anspruch 1, **dadurch gekennzeichnet, dass** eine Membraneinheit (20) in Reihe mit dem Hauptkreislauf des Systems oder einem Teilstromkreislauf des Systems angeordnet ist, die so angeordnet ist, dass Gas, aber nicht Wasser hindurchtreten kann, dass besagter Parallelkreislauf zwei Kreisläufe umfasst, wobei Fluid in einem ersten Kreislauf (21) von dem Hauptkreislauf (1) des Systems durch eine Pumpe (22) zu besagtem Ejektor (3), weiter zu einer Luftabscheidekammer (4) und weiter zu dem Hauptkreislauf (1) des Systems durch eine Leitung (24) geleitet wird, und wobei in einem zweiten Kreislauf (23) Gas von der Seite der Membran der Membraneinheit (20), die der Seite gegenüberliegt, entlang derer das Fluid aus dem Hauptkreislauf (1) des Systems strömt, durch eine Leitung (25) zu der Unterdruckseite des Ejektors (3) geleitet wird, und dass das freie Gas aus der Luftabscheidekammer (4) durch einen Schwimmerentlüfter (26) in die Umgebung abgegeben wird.

4. Anordnung zur Entgasung von wärmeführendem Fluid in Heiz- und Kühlsystemen, wobei das System ein geschlossenes System ist und wobei das Fluid in dem System zirkuliert, wobei ein Kreislauf (2; 21, 23), der parallel zu dem Hauptkreislauf (1) des Systems ist, oder ein Teilstromkreislauf des Systems, so angeordnet ist, dass ein Teilstrom des Fluids geleitet wird, **dadurch gekennzeichnet, dass** eine Pumpe (9; 22) vorhanden ist, die so angeordnet ist, dass Fluid in besagtem Parallelkreislauf (2; 21, 23) durch einen Ejektor (3) gepumpt wird, wodurch der Druck des Fluids während seines Hindurchtretens durch den Ejektor reduziert wird, dass eine Leitung (14; 27) vorhanden ist, die so angeordnet ist, dass sie das Fluid nach dem Ejektor (3) zu einer Luftabscheidekammer (4) leitet, in welcher die zuvor in dem Fluid gelöste Luft in Form von Gasblasen aufsteigt, und dass ein Schwimmerentlüfter (5; 26) vorhanden ist, der so angeordnet ist, dass er das freizusetzende frei Gas in die Umgebung leitet, und dass eine Leitung (12; 24) vorhanden ist, die so angeordnet ist, dass sie das Fluid in der Luftabscheidekammer (4) zu dem Hauptkreislauf (1) des Systems leitet.

5. Anordnung nach Anspruch 4, **dadurch gekennzeichnet, dass** besagter Parallelkreislauf zwei Parallelkreisläufe umfasst, wobei ein erster Kreislauf (6) so angeordnet ist, dass er Fluid durch ein Druckreduzierventil (7) zu einer Entgasungskammer (8) leitet, und wobei ein zweiter Kreislauf so angeordnet ist, dass er Fluid durch eine Pumpe (9) zu besagtem Ejektor (3), weiter zu besagter Luftabscheidekammer (4) und weiter zu dem Hauptkreislauf (1) des Systems leitet, dass die Luftabscheidekammer (4) mit der Entgasungskammer (8) in Verbindung steht, dass eine Leitung (10) von der Unterdruckseite des besagten Ejektors (3) zu der Entgasungskammer (8) angeordnet ist, um in der Entgasungskammer (8) einen Unterdruck zu bilden, und dass ein Schwimmerentlüfter (5; 26) vorhanden ist, der so angeordnet ist, dass er das freizusetzende freie Gas in die Umgebung leitet.

6. Verfahren nach Anspruch 1, **dadurch gekennzeichnet, dass** eine Membraneinheit (20) in Reihe mit dem Hauptkreislauf des Systems oder einem Teilstromkreislauf des Systems angeordnet ist, die so angeordnet ist, dass Gas, aber nicht Wasser hindurchtreten kann, dass besagter Parallelkreislauf zwei Kreisläufe umfasst, wobei ein erster Kreislauf (21) so angeordnet ist, dass er Fluid von dem Hauptkreislauf (1) des Systems durch eine Pumpe (22) zu besagtem Ejektor (3), weiter zu einer Luftabscheidekammer (4) und weiter zu dem Hauptkreislauf (1) des Systems durch eine Leitung (24) leitet, und wobei ein zweiter Kreislauf (23) so angeordnet ist, das er Gas von der Seite der Membran der Membraneinheit (20), die der Seite gegenüberliegt, entlang derer das Fluid aus dem Hauptkreislauf (1) des Systems strömt, durch eine Leitung (25) zu der Unterdruckseite des Ejektors (3) leitet, dass ein Schwimmerentlüfter (5; 26) vorhanden ist, der so angeordnet ist, dass er das freizusetzende freie Gas in die Umgebung leitet, und dass eine Leitung (12; 24) vorhanden ist, die so angeordnet ist, dass sie das Fluid in der Luftabscheidekammer (4) zu dem Hauptkreislauf (1) des Systems leitet.

## Revendications

1. Procédé de dégazage d'un liquide qui contient de la chaleur dans des systèmes de chauffage et de refroidissement, dans lequel le système est un système fermé et dans lequel le liquide circule dans le système, dans lequel un sous-courant du liquide est acheminé vers un circuit (2 ; 21, 23) qui est parallèle au circuit principal (1) du système, ou un circuit de sous-courant du système, **caractérisé en ce que** le liquide dans ledit circuit parallèle (2 ; 21, 23) est pompé par un éjecteur (3), moyennant quoi la pression du liquide est réduite pendant le passage par l'éjecteur, **en ce que** le liquide est acheminé, après l'éjecteur (3), vers une chambre de séparation d'air (4) dans laquelle l'air qui a été préalablement dissout dans le liquide remonte sous la forme de bulles de gaz, **en ce que** le gaz libre est émis dans l'atmosphère par un désaérateur flottant (5 ; 26), et **en ce que** le liquide dans la chambre de séparation d'air (4) est acheminé vers le circuit principal (1) du système.

2. Procédé selon la revendication 1, **caractérisé en ce que** ledit circuit parallèle comprend deux circuits parallèles, dans lequel le liquide dans un premier circuit (6) est acheminé par le biais d'une soupape de réduction de pression (7) vers une chambre de dégazage (8), et dans lequel le liquide dans un second circuit est acheminé par le biais d'une pompe (9) vers ledit éjecteur (3) puis vers ladite chambre de séparation d'air (4) puis vers le circuit principal (1) du système, **en ce que** la chambre de séparation d'air (4) est en communication avec la chambre de dégazage (8), **en ce qu'**une pression négative est formée dans la chambre de dégazage (8) à l'aide d'une conduite (10) entre le côté à pression négative dudit éjecteur (3) et la chambre de dégazage (8), et **en ce que** le gaz libre est émis dans l'atmosphère depuis la chambre de dégazage (8) par le biais d'un désaérateur flottant (5).

3. Procédé selon la revendication 1, **caractérisé en ce qu'**une unité à membrane (20) est prévue en série avec le circuit principal du système, ou un circuit de sous-courant du système, afin de permettre le passage du gaz mais pas de l'eau, **en ce que** ledit circuit parallèle comprend deux circuits, dans lequel le liquide dans un premier circuit (21) est acheminé depuis le circuit principal (1) du système, par le biais d'une pompe (22), vers ledit éjecteur (3), puis vers une chambre de séparation d'air (4) puis vers le circuit principal (1) du système par le biais d'une conduite (24), et dans lequel, dans un second circuit (23), le gaz qui provient du côté de la membrane de l'unité à membrane (20) qui est opposé au côté le long duquel le liquide circule depuis le circuit principal (1) du système est acheminé vers le côté à pression négative de l'éjecteur (3) par le biais d'une conduite (25), et **en ce que** le gaz libre est émis dans l'atmosphère depuis la chambre de séparation d'air (4) par le biais d'un désaérateur flottant (26).

4. Ensemble de dégazage d'un liquide qui contient de la chaleur dans des systèmes de chauffage et de refroidissement, dans lequel le système est un système fermé et dans lequel le liquide circule dans le système, dans lequel un circuit (2; 21, 23) qui est parallèle au circuit principal (1) du système, ou un circuit de sous-courant du système, est prévu pour acheminer un sous-courant du liquide, **caractérisé en ce qu'**une pompe (9 ; 22) est prévue pour pomper le liquide dans ledit circuit parallèle (2 ; 21, 23) par le biais d'un éjecteur (3), moyennant quoi la pression du liquide est réduite pendant son passage par l'éjecteur, et **en ce qu'**une conduite (14 ; 27) est prévue afin d'acheminer le liquide, après l'éjecteur (3), vers une chambre de séparation d'air (4) dans laquelle l'air qui a été préalablement dissout dans le liquide remonte sous la forme de bulles de gaz, et **en ce qu'**un désaérateur flottant (5 ; 26) est prévu pour acheminer le gaz libre à émettre dans l'atmosphère, et **en ce qu'**une conduite (12 ; 24) est prévue pour acheminer le liquide dans la chambre de séparation d'air (4) vers le circuit principal (1) du système.

5. Ensemble selon la revendication 4, **caractérisé en ce que** ledit circuit parallèle comprend deux circuits parallèles, dans lequel un premier circuit (6) est prévu pour acheminer le liquide par le biais d'une soupape de réduction de pression (7) vers une chambre de dégazage (8), et dans lequel un second circuit est prévu pour acheminer le liquide par le biais d'une pompe (9) vers ledit éjecteur (3), puis vers ladite chambre de séparation d'air (4), puis vers le circuit principal (1) du système, **en ce que** la chambre de séparation d'air (4) est en communication avec la chambre de dégazage (8), **en ce qu'**une conduite (10) du côté à pression négative dudit éjecteur (3) et la chambre de dégazage (8) est prévue pour former une pression négative dans la chambre de dégazage (8), et **en ce qu'**un désaérateur flottant (5 ; 26) est prévu pour acheminer le gaz libre à émettre dans l'atmosphère.

6. Procédé selon la revendication 1, **caractérisé en ce qu'**une unité à membrane (20) est placée en série avec le circuit principal du système, ou un circuit de sous-courant du système, prévu pour permettre le passage du gaz mais pas de l'eau, **en ce que** ledit circuit parallèle comprend deux circuits, dans lequel un premier circuit (21) est prévu pour acheminer le liquide depuis le circuit principal (1) du système par le biais d'une pompe (22) vers ledit éjecteur (3), puis vers une chambre de séparation d'air (4), puis vers le circuit principal (1) du système par le biais d'une conduite (24), et dans lequel un second circuit (23) est prévu pour acheminer le gaz depuis le côté de la membrane de l'unité à membrane (20) qui est opposé au côté le long duquel le liquide circule depuis le circuit principal (1) du système vers le côté à pression négative de l'éjecteur (3) par le biais d'une conduite (25), **en ce qu'**un désaérateur flottant (5 ; 26) est prévu pour acheminer le gaz libre à émettre dans l'atmosphère, et **en ce qu'**une conduite (12 ; 24) est prévue pour acheminer le liquide dans la chambre de séparation d'air (4) vers le circuit principal (1) du système.
